# EUROPEAN PATENT APPLICATION

(11) **EP 3 733 335 A1**
(43) Date of publication of application: **04.11.2020**
(21) Application number: 20164098.4
(22) Date of filing: 19.03.2020
(51) Int. Cl.: B23D 25/12, B23D 35/00, B21D 22/20, B21D 28/06, B21D 35/00, B21D 45/08

(54) **A CUT-TO-LENGTH LINE FOR CUTTING A STRIP OF SHEET METAL INTO FLAT PIECES**

(30) Priority: 12.04.2019 IT 201900005676
(71) Applicant: Arcelormittal CLN Distribuzione Italia S.r.l., 10040 Caselette (Torino) (IT)
(72) Inventor: TABONE, Attilio, I-10098 RIVOLI (Torino) (IT)
(74) Representative: Vanzini, Christian

(57) **Abstract**

A cut-to-length line, comprising
a flattener (4) designed to draw a strip of sheet metal (T) from an unreeling coil (1) and flatten the strip of sheet metal (T), and
shears (6) comprising at least one blade (10, 20) designed to cut the flattened strip (T) transversely so as to form flat pieces of sheet metal (P),
in which the blade (10, 20) has a non-rectilinear cutting edge (12, 22) and is designed to make a non-rectilinear cross cut on the strip of sheet metal (T).

## Description

The present invention generally refers to cut-to-length lines for processing coils of sheet metal.

As is well known, in a cut-to-length line a strip of sheet metal is unwound from a coil, flattened, and cut into pieces of a preset length which are then stacked. The final product of a cut-to-length line is therefore a flat piece of sheet metal cut to within a precise length tolerance.

The pieces produced in cut-to-length lines are semi-finished products that, in industry, undergo subsequent fabrication processes in the manufacturing of various products. Examples of such fabrication processes are stamping with a press or laser cutting. Generally, in the course of such processes the flat pieces are held on the outer areas thereof. These areas, which cannot be processed because they are being held by dedicated gripping components, generally end up becoming processing trimmings, resulting in material waste.

Consequently, one purpose of this invention is to provide means making it possible to reduce material waste.

Given this purpose, the subject matter of the invention is a cut-to-length line comprising
a flattener designed to draw a strip of sheet metal from an unreeling coil and flatten the strip of sheet metal, and
shears comprising a pair of opposed blades designed to cut the flattened strip transversely so as to form flat pieces of sheet metal,
wherein each said blade has a sinusoidal cutting edge, said blades being designed to make a sinusoidal cross cut on the strip of sheet metal having a plurality of protruding tabs separated by indentations.

Compared to pieces produced with known cut-to-length lines, which are made with a straight cut, there is less material present in the outer areas which end up becoming processing trimmings. Consequently, there is less material waste.

In particular, the sinusoidal cutting edge on the one hand reduces material waste and on the other hand does not jeopardize effective gripping of the part during the subsequent processing phases of the semi-finished product. In addition, a sinusoidal cut is easier to achieve than other forms of non-rectilinear cuts.

In general, a cut-to-length line may also comprise a stacker designed to stack the flat pieces of sheet metal in a stack.

Additional features and advantages of the cut-to-length line according to the invention will become clearer from the following detailed description of an embodiment of the invention given in reference to the enclosed drawings, provided solely for illustration and non-limiting purposes, in which
figure 1 is a simplified schematic view of a cut-to-length line according to the invention;
figure 2 is a front view of a cutting unit of shears in the line of figure 1;
figure 3 is a side view of the cutting unit of figure 2;
figures 5-7 are a perspective view, a front view, and a plan view, respectively, of a lower blade in the cutting unit of figure 2;
figures 8 and 9 are a front view and a plan view, respectively, of an upper blade in the cutting unit of figure 2; and
figure 10 is a plan view showing the cutting of a piece from a strip of sheet metal.

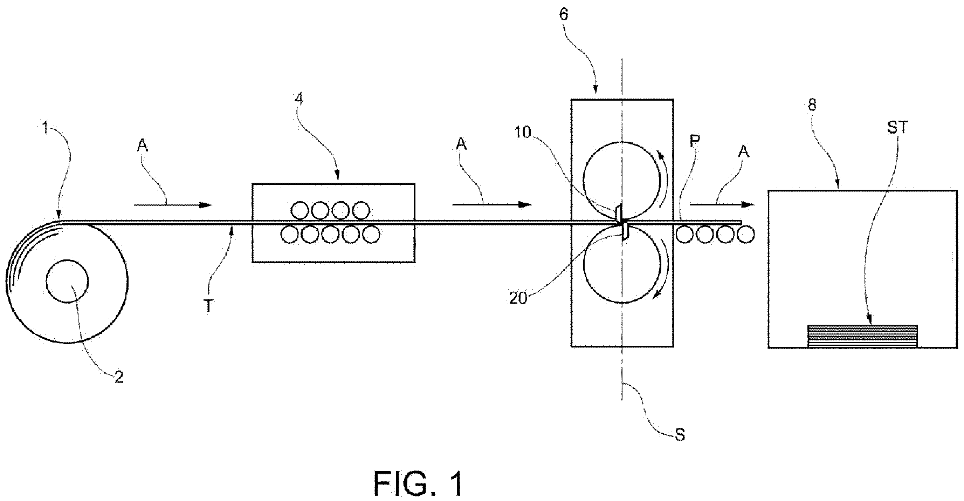

Figure 1 shows an example of a cut-to-length line to which the present invention is applied.

This line includes a coil 1 of sheet metal installed on a decoiler 2, a flattener 4, shears 6, and a stacker 8.

Flattener 4 is placed downstream of decoiler 2 and comprises a plurality of upper rollers and lower rollers. At least some of these rollers are motor-driven to draw a strip of sheet metal T from coil 1 and move said strip at a constant speed, as shown by arrows A. Decoiler 2 and flattener 4 are conventional. Flattener 4 may comprise various successive flattening stages with different sets of rollers to apply various known treatments to strip of sheet metal T so as to eliminate all memory effects that would tend to return the strip to its original curved shape, and also to eliminate flatness defects that may be present in the strip, such as, for example, bumps in the middle or on the sides, wavy edges, cross bow, or longitudinal curvature (coil set).

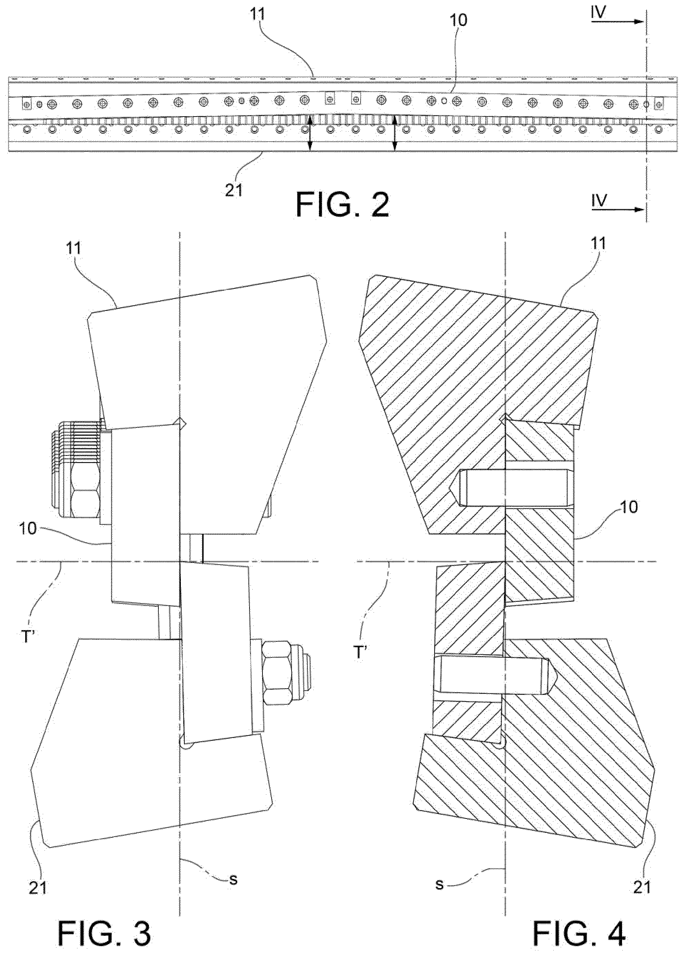

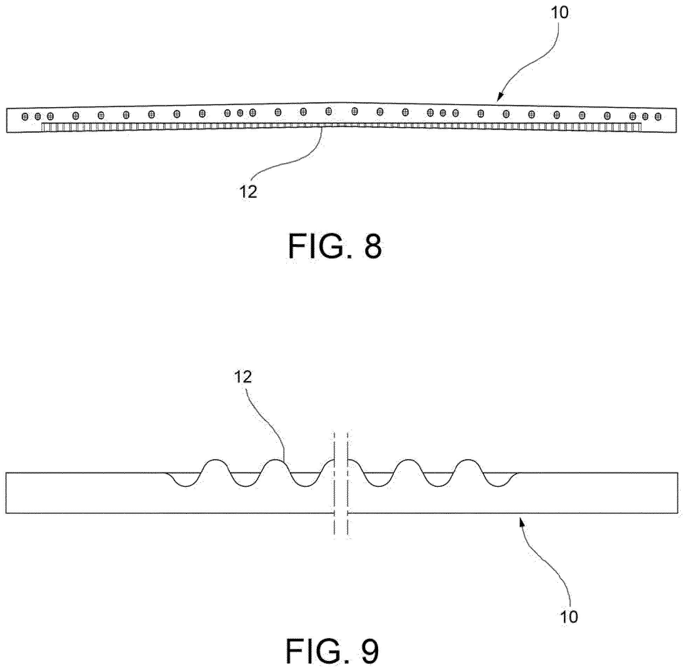

Shears 6 are placed downstream of flattener 4 and are conventional shears, such as flying, rotary, mechanical, or tilting shears. For example, the shears in the line in figure 1 are rotary shears. Shears 6 comprise a pair of opposed blades 10 and 20 designed to cross-cut moving strip T so as to form flat pieces of sheet metal P. One embodiment of blades 10 and 20 is shown in figures 2-9 and discussed below. For the purposes of this invention, a cross cut is understood as a cut that interrupts the continuity of the strip of material and which may be perpendicular to the longitudinal direction of the strip (that is, forward direction A) or also oblique, that is, with a certain angle other than perpendicular. In figure 1, dotted-and-dashed vertical line S shows the cutting point at which a piece P is separated from strip T.

Stacker 8 is placed downstream of shears 6 and is designed to stack the flat pieces of sheet metal P coming from shears 6 in a stack ST.

Stacker 8 is also of a conventional type, which may, for example, be a magnetic, vacuum, combined, anti-slip mechanical, or air-cushion stacker, or another type of stacker.

Figures 2-4 show a cutting unit of shears 6 in figure 1. This unit comprises an upper blade holder 11, which holds upper blade 10, which is in turn held by an upper drum of shears 6, and a lower blade holder 21, which holds lower blade 20 and is in turn held by a lower drum of shears 6. The cutting unit is shown in figures 2 and 4 in the position in which blades 10 and 20 meet at cutting point S. In figures 3 and 4, the horizontal dotted and dashed line T' represents the plane of the strip of sheet metal T.

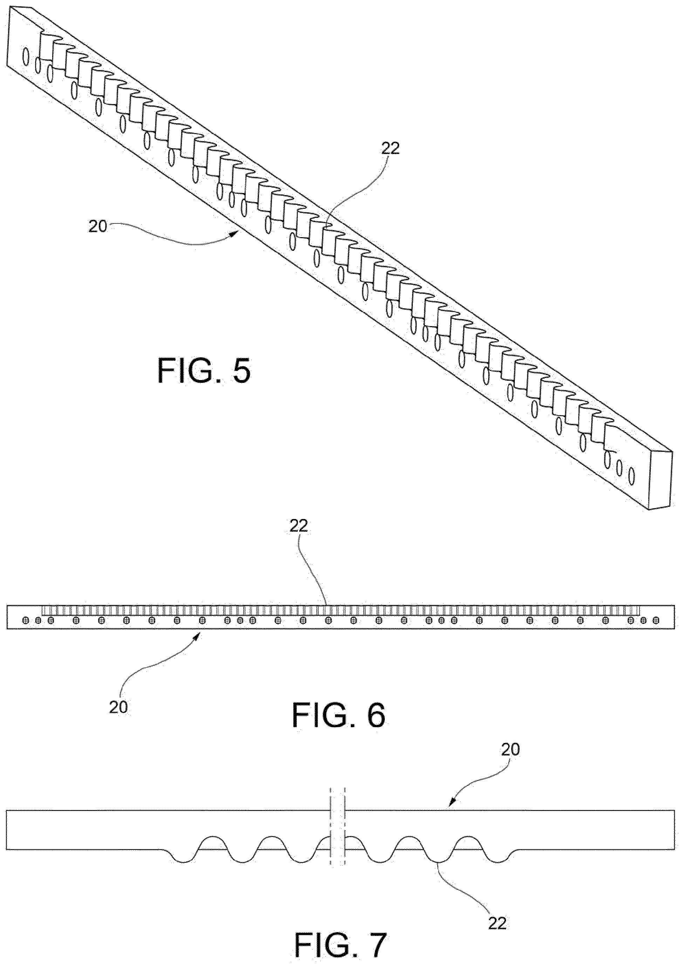

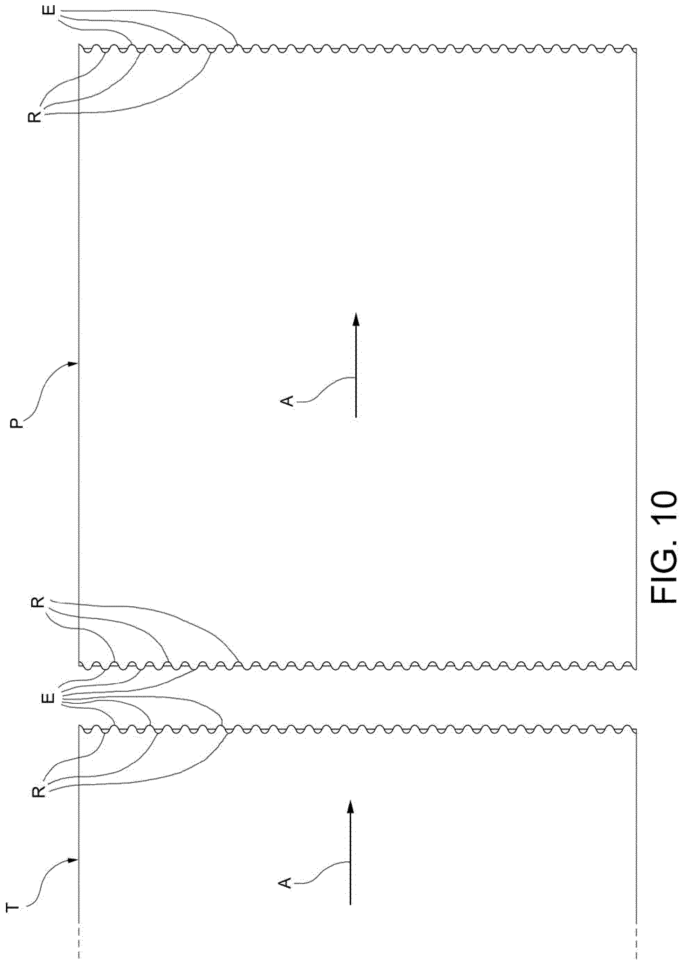

As can be seen in figures 5-7 and 8-9, each blade 10 and 20 comprises a cutting edge, 12 and 22 respectively, having the shape of a periodic wave, particularly a sinusoidal shape, and is designed to make a cross cut on strip of sheet metal T having a plurality of protruding tabs E separated by indentations R (see figure 10).

The invention is not intended to be limited to the embodiments described and illustrated herein, but rather may undergo modifications in terms of the shape and arrangement of parts and construction and operation details according to the numerous possible variants that persons skilled in the art may find suitable, and which are to be considered included within the scope of the invention as defined by the following claims.

## Claims

1. A cut-to-length line, comprising
a flattener (4) designed to draw a strip of sheet metal (T) from an unreeling coil (1) and flatten the strip of sheet metal (T), and
shears (6) comprising a pair of opposed blades (10, 20) designed to cut the flattened strip (T) transversely so as to form flat pieces of sheet metal (P),
**characterized in that** each said blade (10, 20) has a sinusoidal cutting edge (12, 22), said blades being designed to make a sinusoidal cross cut on the strip of sheet metal (T) having a plurality of protruding tabs (E) separated by indentations (R).

2. A line according to claim 1, further comprising a stacker (8) designed to stack the flat pieces of sheet metal (P) in a stack (ST).
